# EUROPEAN PATENT APPLICATION

(11) **EP 4 266 451 A1**
(43) Date of publication of application: **25.10.2023**
(21) Application number: 22169586.9
(22) Date of filing: 22.04.2022
(51) Int. Cl.: H01M 10/48, H01M 50/103, H01M 50/119, H01M 50/578, H01M 50/548, H01M 50/55, H01M 10/42

(54) **IMPROVED ELECTRIC BATTERY ASSEMBLY**

(71) Applicant: Dukosi Limited, Edinburgh, EH14 4AP (GB)
(72) Inventor: LEWORTHY, Josh, Edinburgh, EH14 4AP (GB); MAIR, Stuart, Edinburgh, EH14 4AP (GB); CUNNINGHAM, Stuart, Edinburgh, EH14 4AP (GB)
(74) Representative: Finnegan Europe LLP

(57) **Abstract**

An electric battery assembly is disclosed comprising: a battery cell having an exterior housing and first and second electrical terminals enabling power to be drawn from the battery cell, the housing being electrically coupled to the first electrical terminal and electrically insulated from the second electrical terminal; an electronic unit comprising a measurement device; and wherein the electronic unit is electrically connected to the second electrical terminal and to the housing, thereby electrically coupling the electronic unit to the first battery cell terminal via the housing, enabling the measurement device to measure a property of the battery cell.

## Description

### Technical Field

The present disclosure relates to an electric battery assembly comprising a battery cell and an electronic unit, the electronic unit comprising a measurement device for measuring a property of the battery cell. In particular, means for electrically coupling the electronic unit to battery cell are disclosed to enable the measurement device to measure a property of the battery cell. In addition battery packs comprising a plurality of the aforementioned battery assemblies are disclosed.

### Background

Known battery cells may comprise a measuring device arranged to measure a performance characteristic of the battery cell, such as the voltage or current output by the battery cell. Faulty and non-ideal operation of the battery cell may then be inferred from voltage, current, or other measurement data taken of the battery cell. Typically, this requires electrically connecting the measurement device to both electrical terminals of the battery cell. To achieve this, physical connections, for example using conductive wires, span the distance of separation of the terminals from the measuring device. For battery cells having small physical dimensions, this requirement does not present significant disadvantages during assembly of the battery. However, for physically larger form-factor batteries, for example, but not limited to, batteries where the distance of separation between the battery terminals is equal to or greater than 100mm, having to physically connect the measuring device to both terminals via physical connections, such as wiring, increases the complexity and cost of assembly. Similar challenges are encountered where the cell terminals are located on different faces of the battery cell.

The routing of long wires between cell terminals and measurement device can present short circuit hazards. Where the measurement device is also powered by the battery cell it is electrically connected to, the use of long physical wires to provide the electrical connection may introduce errors in cell voltage measurements taken by the measurement device. This problem may be resolved by providing a kelvin connection. However, this requires doubling the number of wires, and further increases the complexity of assembly.

It is an object of at least some embodiments of the present disclosure to address one or more shortcomings of the prior art, and in particular to provide a more convenient means for electrically coupling an electronic unit comprising a measurement device to a battery cell, which is also suitable for use with larger form-factor batteries and for batteries where the electrical terminals are located at different faces of the battery.

### Summary of the Disclosure

In accordance with an aspect of the disclosure, there is provided an electric battery assembly comprising a battery cell and an electronic unit comprising a measurement device. The battery cell comprises an exterior housing and first and second electrical terminals enabling power to be drawn from the battery cell. The housing may be electrically coupled to the first electrical terminal and electrically insulated from the second electrical terminal. The electronic unit may be electrically connected to the second electrical terminal and to the housing, thereby electrically coupling the electronic unit to the first battery cell terminal via the housing, enabling the measurement device to measure a property of the battery cell. In this way, an electrical connection may be established between the electrical terminals of the battery cell and the electronic device without requiring the use of electrical wiring spanning the distance of separation between the cell terminals and the electronic unit. The electronic unit may also be electrically powered by the battery cell. This is advantageous when the electronic unit is not provided with an alternative power source. The first and second electrical terminals may relate to respectively the positive and negative electrical terminals of the battery cell, or to the negative and positive electrical terminals of the battery cell.

The electric battery assembly may comprise an electrical insulator configured to insulate the second electrical terminal from the housing. The electrical insulator may comprise a support structure configured to support the electronic unit. The support structure may comprise a cradle configured to secure the electronic unit, at least partly, within the cradle.

In some embodiment the electrical insulator comprises a printed circuit board (PCB), and the electronic unit may be fixated to the PCB. This is particularly advantageous, as it reduces the amount of componentry required during manufacture of the battery assembly. The electronic unit itself would, typically, be fixated to a PCB. For example, the electronic unit may comprise a microprocessor fixated to a PCB, and this PCB may also provide the functionality of the electrical insulator, thus obviating the need for an additional insulator. Furthermore, in certain embodiments, the electrical contacts required to electrically couple the electronic unit to respectively the housing and the second electrical terminal may be comprised in the PCB, further simplifying manufacture of the battery assembly, and providing a more convenient retrofittable solution.

The electronic unit may comprise a wireless transmitter configured to wirelessly transmit the measured property of the battery cell. For example, the measured property may be wirelessly transmitted to a battery management system (BMS) located remotely from the battery assembly. Received information may then be used by the BMS to manage operation and usage of the battery assembly.

In accordance with some embodiments, the electric battery assembly may comprise a current interrupt device (CID). The CID may comprise a pressure detector configured to detect when an internal gas pressure of the battery cell is greater than or equal to a predetermined gas pressure. The CID may be configured to establish an electrical contact with the electronic unit in dependence on the internal gas pressure of the battery cell being greater than or equal to the predetermined gas pressure. In this way the electronic unit may be used to monitor the state of the CID. The electronic unit may further be configured to transmit a signal to a BMS when the CID is in electrical contact with the electronic unit.

In accordance with another aspect of the disclosure there is provided an electric battery, or battery pack, comprising a plurality of aforementioned electric battery assemblies.

### Brief Description of Drawings

In the succeeding sections of the disclosure, specific embodiments of the disclosure will be described, by way of non-limiting example only, with reference to the accompanying figures, in which:
FIG. 1 is a perspective view of an electric battery assembly comprising an electronic unit electrically connected to the battery cell housing and to the second battery cell terminal, which is electrically insulated from the cell housing, in accordance with an embodiment;
FIG. 2 is a magnified view of the second battery cell terminal and electrically connected electronic unit of FIG. 1;
FIG. 3 is a cross-sectional side view of the second battery terminal and electrically connected electronic unit of FIG.'s 1 and 2;
FIG. 4 is a cross-sectional side view of the second battery terminal and electrically connected electronic unit, in accordance with an embodiment in which the electrical insulator comprises a printed circuit board (PCB);
FIG. 5 is a perspective, exploded view of an electric battery assembly comprising a current interrupt device (CID), in accordance with an embodiment;
FIG. 6 is a perspective view of an electric battery assembly, wherein the electrical insulator comprises a support structure configured to support the electronic unit;
FIG. 7 is an exploded perspective view of the electric battery assembly of FIG. 6, in which pin contacts are used to establish an electrical connection between the electronic unit and respectively the battery cell housing and the second electrical terminal of the battery cell;
FIG. 8 is a cross-sectional perspective view of the electric battery assembly of FIG. 6, illustrating the pin contacts;
FIG. 9 is an electric battery assembly comprising a battery cell having a rectangular prismatic form-factor, in which the first and second battery cell terminals are located on opposing faces at opposite ends of the battery cell, in accordance with an embodiment; and
FIG. 10 is a perspective view of one end face of the electric battery assembly of FIG. 9.

### Detailed Description of Embodiments

In the following illustrative description of embodiments, like numbered reference numerals appearing in different figures will be used to refer to shared features.

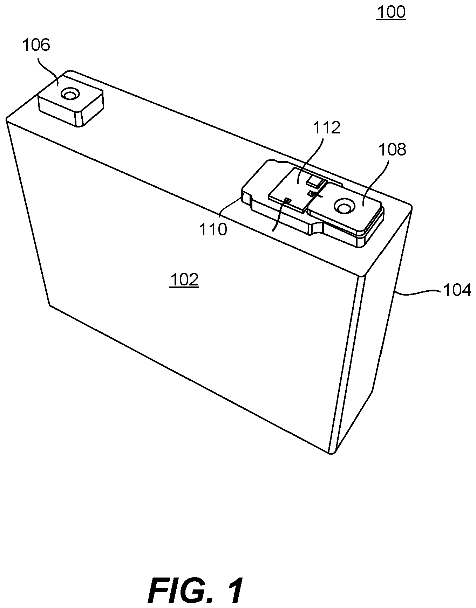

FIG. 1 illustrates a perspective view of electric battery assembly 100, in accordance with an embodiment of the disclosure. Electric battery assembly 100 comprises battery cell 102, having housing 104. Battery cell 102 comprises first 106 and second 108 electrical terminals. First 106 and second 108 electrical terminals may relate respectively to positive and negative battery cell terminals, or to negative and positive battery cell terminals. In other words, either first electrical terminal 106 may relate to a positive battery cell terminal and second electrical terminal 108 to the negative cell terminal, or vice versa. Either configuration is suitable for use with the herein disclosed embodiments. First 106 and second 108 electrical terminals are connected to electrodes within battery cell 102. The electrodes relate to the anode and cathode. In addition, the following features are located within battery cell 102: a separator, electrolyte and current collectors. In combination with the anode and cathode, these features are sometimes referred to as an electrode stack. Battery cell 102 may comprise one or more electrode stacks within it (not shown). First 106 and second 108 electrical terminals enable electric power to be drawn from battery cell 102 by virtue of being connected to one or more electrode stacks within battery cell 102.

First electrical terminal 106 is electrically coupled to housing 104. In this way, housing 104 effectively acts as an electrical terminal for battery cell 102. Second electrical terminal 106 is electrically insulated from housing 104 by electrical insulator 110. Electric battery assembly 100 comprises electronic unit 112. Electronic unit 112 comprises a measurement device, and in some embodiments may also comprise a wireless transmitter for communicating measurement data with, for example, an external remote battery management system (BMS), or with any other device. Electronic unit 112 is electrically connected to second electrical terminal 108, and to housing 104. Electrical connection of electronic unit 112 to housing 104 electrically couples electronic unit 112 to first battery cell terminal 106, since housing 104 is itself electrically coupled to first battery cell terminal 106. In this way electrical coupling between both first 106 and second 108 electrical battery cell terminals and electronic unit 112 may be established, without requiring a direct physical connection between electronic unit 112 and both electrical battery cell terminals.

Electrical coupling of first 106 and second 108 battery cell terminals with electronic unit 112 enables the measurement device to measure a property of battery cell 102. For example, such measurement may comprise, but is not limited to, any one or more of: a current measurement, a voltage measurement, temperature. Additionally, in certain embodiments electrical coupling of first 106 and second 108 battery cell terminals with electronic unit 112 may enable electric power to be drawn from battery cell 102 to power electronic unit 112, and the associated measurement device. This is particularly useful in embodiments where electronic unit 112 is not otherwise provided with a separate power source.

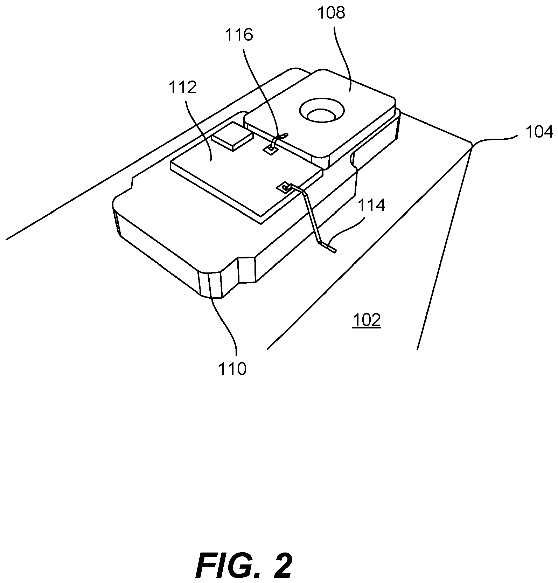

FIG. 2 is a magnified view of a portion of battery assembly 100 of FIG. 1, and illustrates a non-limiting example of how electronic unit 112 may be electrically connected to second battery cell terminal 108 and housing 104, in accordance with certain embodiments. As illustrated, electronic unit 112 comprises first 114 and second 116 electrical contacts, connecting electronic unit 112 to respectively housing 104 and second electrical terminal 108. In accordance with some non-limiting embodiments, first 114 and second 116 electrical contacts may be established by any one or more of: welding, wire bonding, conductive adhesion, crimping, soldering, a press-fit contact, sprung contacts. Electronic unit 112 may be directly fastened to electrical insulator 110 by, for example, an adhesive.

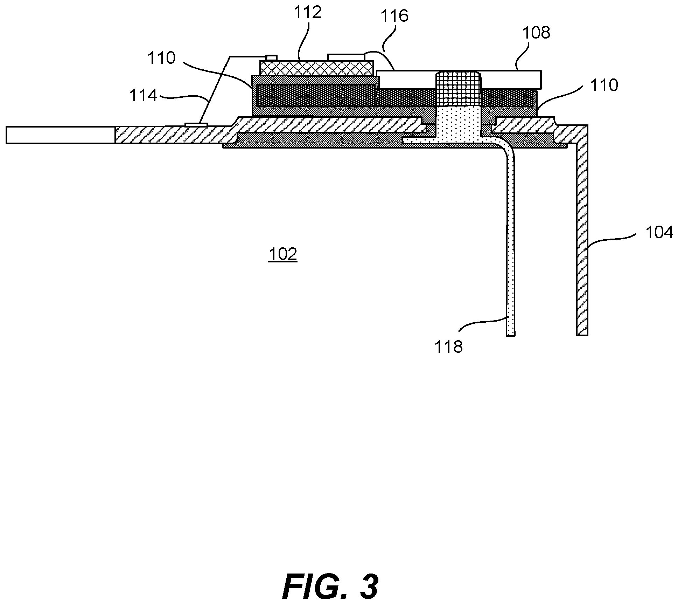

FIG. 3 is a cross-sectional side view of the magnified portion of battery assembly 100 illustrated in FIG. 2. FIG. 2 illustrates electrical insulator 110 providing a support structure for electronic unit 112. In the illustrated embodiment, electrical insulator 110 forms a snap-fit connection around second electrical terminal 108, thereby insulating it from housing 104. In some embodiments, electrical insulator 110 may form an interference fit around second electrical terminal 108. Electrical insulator 110 may be formed of any electrically insulating material. For example, in some embodiment electrical insulator 110 may be formed of an electrically insulating plastic material. The precise material of electrical material 110 is immaterial for present purposes, provided that it is electrically insulating. Purely for non-limiting illustrative purposes, in FIG. 3, the orientation of first electrical contact 114 has been changed relative to its orientation in FIG. 2, to show the electrical connection of electronic unit 112 with housing 104. FIG. 3 also clearly shows electrode 118 coupled to second battery cell terminal 108.

In some embodiments, the snap-fit or interference fit connection of electrical insulator 110 to second electrical terminal 108 enables the combined electrical insulator 110 and attached electronic unit 112 to be retrofittable to battery cell 102, after assembly of battery cell 102. Such connection also facilitates removal of electrical insulator 110 and electronic unit 112 for battery maintenance.

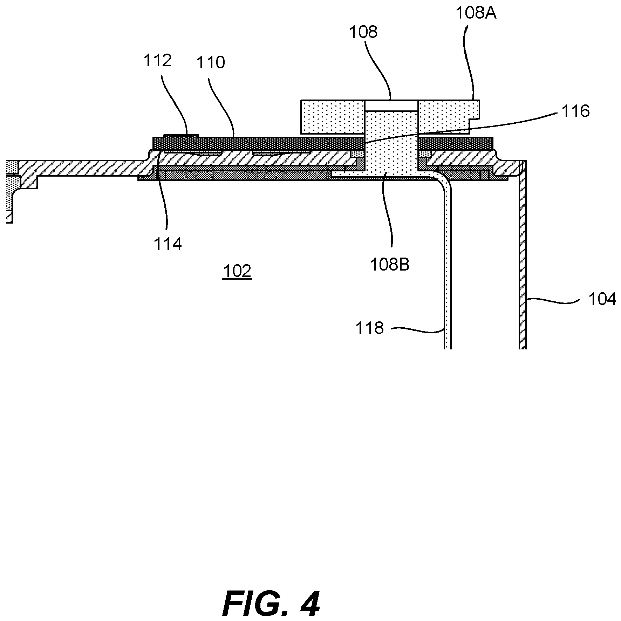

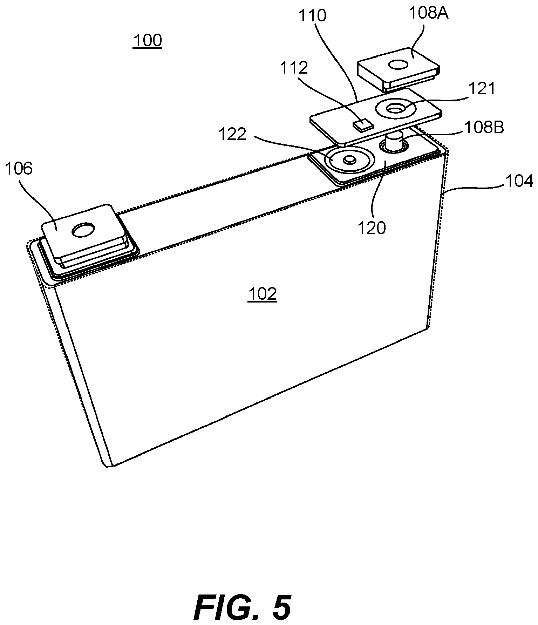

In accordance with some embodiments, electrical insulator 110 may comprise a printed circuit board (PCB) to which electronic unit 112 is electrically connected. FIG. 4 is a cross-sectional side view of second electrical terminal 108, in such an embodiment. Second electrical terminal 108 may comprise terminal cap 108A and stud 108B. A physical connection with either cap 108A or stud 108B suffices to provide an electrical connection with second electrical terminal 108. As illustrated, electrical insulator 110 comprises a PCB to which electronic unit 112 is attached. The PCB may be made of a plastic material, such as FR-4. PCB 110 may be configured with cut-out 121 complementary in shape to the cross-sectional shape of stud 108B, and configured to receive stud 108B. This enables PCB 110 to fit around stud 108B. Terminal cap 108A may be configured to hold PCB 110 in place, as illustrated in FIG. 5, by engaging the end of stud 108B protruding from cut-out 121 in PCB 110. PCB 110 may be configured with electrical wiring within its laminate to establish first 114 and second 116 electrical contacts between housing 104, electronic unit 112 and second electrical terminal 108. For example, PCB 110 may comprise first electrical contact 114 on its bottom surface, positioned to enable an electrical connection to be established with housing 104, when PCB 110 is in contact with housing 104. Similarly, PCB 110 may be configured with second electrical contact 116 positioned at the face of cut-out 121, enabling an electrical connection to be established with second electrical terminal 108, via stud 108B, when PCB 110 is fit around stud 108B.

In accordance with some embodiments, electric battery assembly 100 may comprise a current interrupt device (CID). Conventionally, a CID is configured to open-circuit a battery cell, when internal gas pressure is equal to or greater than a predetermined pressure. The predetermined gas pressure may relate to a threshold pressure value within the battery cell, at which continued operation of the battery cell is considered dangerous, and could potentially result in catastrophic battery failure. The CID serves as a safety device to prevent excessive gas pressure build-up within the battery cell, to reduce the likelihood of catastrophic battery failure.

FIG. 5 is an exploded, perspective view of battery assembly 100 comprising CID 120, in accordance with an embodiment. CID comprises a pressure detector 122 configured to detect when an internal gas pressure of battery cell 102 is greater than or equal to a predetermined gas pressure. CID 120 may be configured to establish an electrical contact with electronic unit 112 in dependence on the internal gas pressure of battery cell 102 being greater than or equal to the predetermined gas pressure. Electronic unit 112 may be configured to transmit a signal to, for example, an external, remotely located battery management system (BMS) when CID 120 is in electrical contact with electronic unit 112. The electronic signal being indicative that the internal gas pressure within battery cell 102 is equal to or greater than the predetermined internal gas pressure, and therefor indicative that battery cell 102 may no longer be in safe operating state. In embodiments where electronic unit 112 comprises a wireless transmitter, the electronic signal may be transmitted to the BMS by the wireless transmitter. Upon receipt of the electronic signal, the BMS may take any necessary action to mitigate for the safety risk associated with the detected build-up of internal gas pressure within battery cell 102.

In some embodiments, CID 120 may operate in its known conventional manner. For example, CID 120 may be connected to a fused circuit (not shown in FIG. 5). When pressure detector 122 detects that the internal gas pressure is equal to or greater than the predetermined gas pressure, CID 120 causes the fuse to blow, thereby open-circuiting battery cell 102.

In the embodiment illustrated in FIG. 5, pressure detector 122 may comprise a diaphragm configured to deform and establish the electrical contact with electronic unit 112. Additionally, as illustrated in FIG. 5, electrical insulator 110 may be a PCB. PCB 110 may be provided with an electrical contact on its bottom face, such that when the diaphragm deforms and overturns, the electrical contact with electronic unit 112 is established.

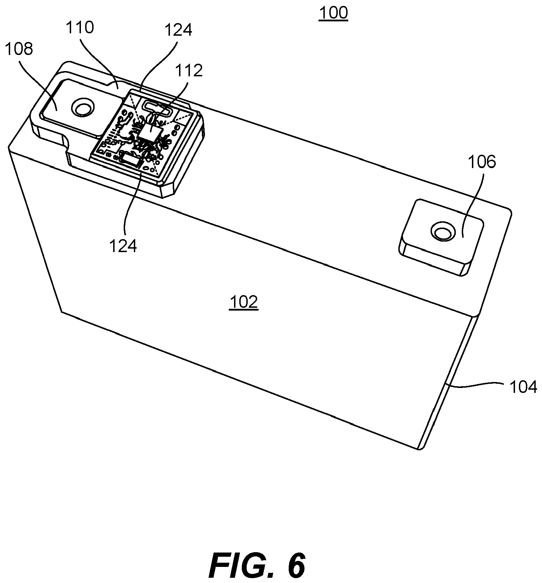

FIG. 6 illustrates a further embodiment, in which electrical insulator 110 defines a support structure for receiving electronic unit 112. For example, electrical insulator 110 may comprise cradle 124 configured to receive electronic unit 112, at least partly, within it. Electronic unit 112 may be fixated to cradle 124 by any suitable means or device. For example, by any one or more of: an adhesive strip, an interference fit, a snap-fit.

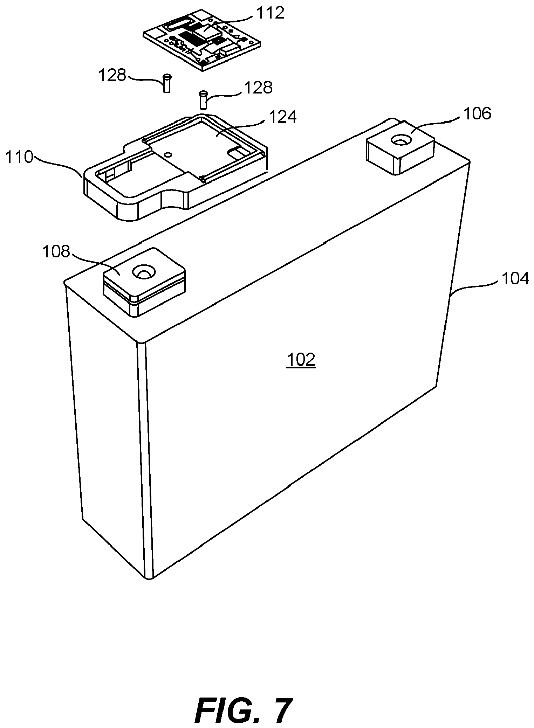

FIG. 7 is an exploded, perspective view of battery assembly 100 of FIG 6. Cradle 124 is clearly illustrated. Electronic unit 112 is fastened to cradle 124 via pin contacts 128, which also double as electrical contacts, thereby establishing the electrical connection to second electrical terminal 108 and to housing 104. As illustrated, cradle 124 defines a recess for receiving electronic unit 112.

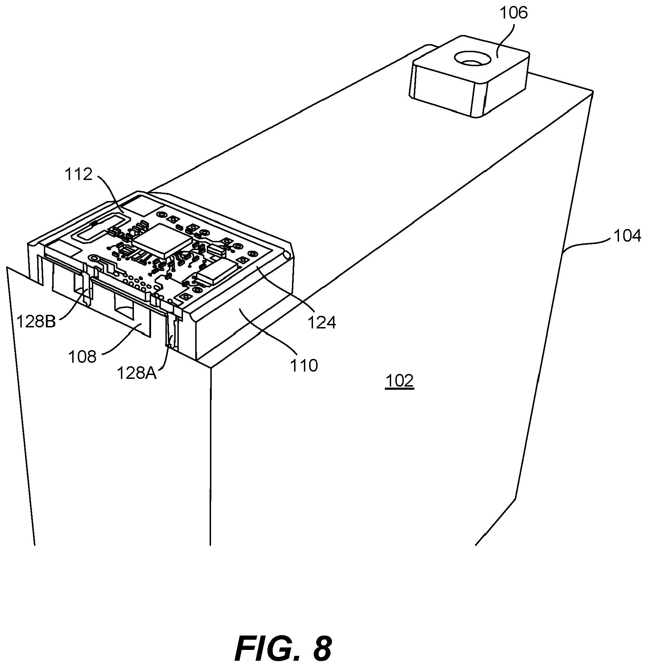

FIG. 8 is a cross-sectional perspective view of assembly 100 of FIG. 7. The cross-section is taken along second electrical terminal 108 in a plane parallel to the width of battery cell 102. First pin contact 128A establishes electrical contact with housing 104, whilst second pin contact 128B establishes electrical contact with second electrical terminal 108. In accordance with some embodiments, pin contacts 128A and 128B may comprise spring-loaded pins, configured such that when electronic unit 112 is placed in cradle 124, the springs are compressed. Compression of the springs displaces first 128A and second 128B pin contacts such that electrical contact between electrical unit 112 and respectively housing 104 and second electrical terminal 108 is established.

The means for electrically coupling an electronic unit to the electrical terminals of a battery cell disclosed herein are particularly convenient for use with battery cells having a form-factor where the distance of separation between the electrical terminals is large, and/or where the electrical terminals are located on different faces of the battery cell. As mentioned previously, electrically coupling one of the battery terminals to the battery housing, effectively results in the housing doubling as one of the battery terminals. Therefore, all that is required to establish an electrical circuit between the battery terminals and an electronic unit, is an electrical connection between the electronic unit and the electrical terminal of the cell that is electrically insulated from the housing, and an electrical connection between the electronic unit and the housing. This may significantly reduce the amount of electrical wiring required to electrically couple the electronic unit to the battery cell.

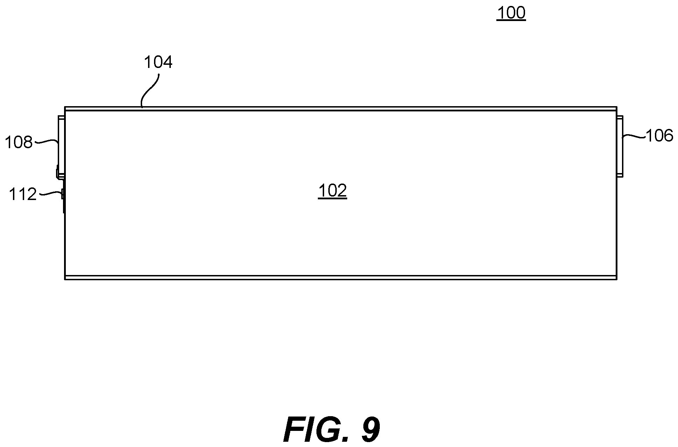

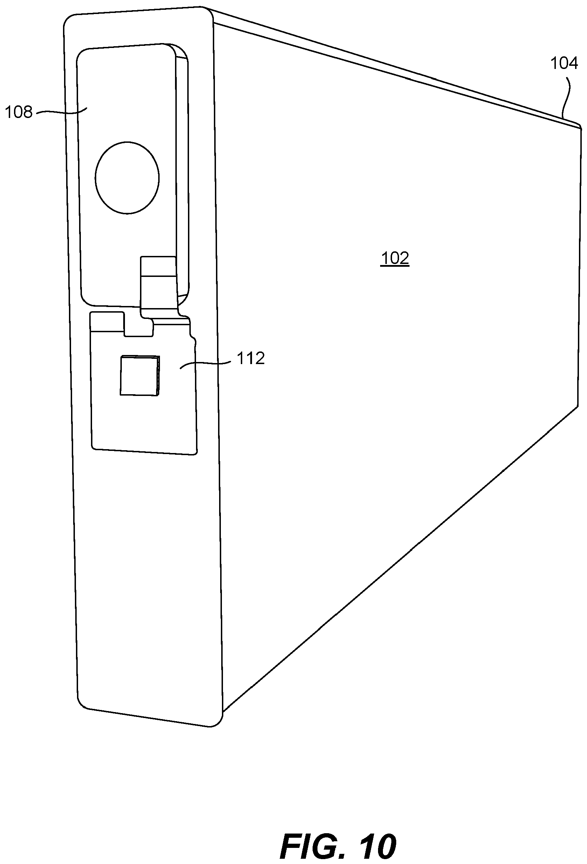

FIGS. 9 and 10 are examples of battery cells having different form-factors, where use of the herein disclosed means for electrically coupling electronic unit 112 to the battery cells may be particularly advantageous. FIG. 9 illustrates a rectangular-shaped prismatic cell, having a length greater than its width, in which the first 106 and second 108 electrical terminals are located on opposing faces of battery cell 102. More specifically, the first 106 and second 108 electrical terminals are located on opposing end faces of battery cell 102, the end faces being located at opposite ends of the cell's length. Coupling electronic unit 112 to housing 104 and second electrical terminal 108 as previously disclosed, facilitates assembly of battery assembly 100, for reasons previously disclosed. FIG. 10 is a perspective view of the end face of battery cell 102 comprising second electrical terminal 108 and electronic unit 112, illustrated in FIG. 9.

It is to be appreciated that in accordance with embodiments of the disclosure, the electronic unit may be positioned at any location on the housing, as this suffices to electrically couple the electronic unit to the first electrical terminal. It is simply for convenience that the enclosed illustrated embodiments depict the electrical unit being located on the battery cell face comprising the second electrical terminal, as this minimizes the length of electrical contact required to electrically couple the electronic unit to the second electrical terminal.

It is also to be appreciated that first 106 and second 108 electrical terminals may relate respectively to the positive and negative battery cell terminals, or respectively to the negative and positive battery cell terminals. In other words, it is immaterial which electrical terminal housing 104 is electrically coupled to, and which electrical terminal is electrically insulated from housing 104.

The descriptions of the various embodiments of the present disclosure have been presented for purposes of illustration, and are not intended to be exhaustive or limiting to the scope of the disclosure. Many modifications and variations of the disclosed embodiments will be apparent to those of ordinary skill in the art from the herein disclosed embodiments, without departing from the scope of the disclosure. The terminology used herein to disclose the embodiments of the disclosure was chosen to best explain the principles of the embodiments, the practical application or technical improvement over technologies found in the marketplace, or to enable others of ordinary skill in the art to understand the embodiments disclosed herein.

It is appreciated that certain features of the disclosure, which are, for clarity, described in the context of separate embodiments, may also be provided in combination in a single embodiment. Conversely, various features of the disclosure, which are, for brevity, described in the context of a single embodiment, may also be provided separately or in any suitable sub-combination or as suitable in any other described embodiment of the disclosure. Certain features described in the context of various embodiments are not to be considered essential features of those embodiments, unless the embodiment is inoperative without those elements.

Although the disclosure has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

## Claims

1. An electric battery assembly comprising:
a battery cell having an exterior housing and first and second electrical terminals enabling power to be drawn from the battery cell, the housing being electrically coupled to the first electrical terminal and electrically insulated from the second electrical terminal;
an electronic unit comprising a measurement device; and wherein
the electronic unit is electrically connected to the second electrical terminal and to the housing, thereby electrically coupling the electronic unit to the first battery cell terminal via the housing, enabling the measurement device to measure a property of the battery cell.

2. The electric battery assembly of claim 1, comprising:
an electrical insulator configured to insulate the second electrical terminal from the housing.

3. The electric battery assembly of claim 2, wherein the electrical insulator comprises a support structure configured to support the electronic unit.

4. The electric battery assembly of claim 3, wherein the electrical insulator comprises a cradle configured to secure the electronic unit at least partly within the cradle.

5. The electric battery assembly of claim 3 or 4, wherein the electrical insulator comprises a printed circuit board "PCB", and the electronic unit is fixated to the PCB.

6. The electronic battery assembly of any one of claims 3 to 5, wherein the electrical insulator comprises first and second contacts, the first contact being configured to electrically couple the electronic unit to the housing, and the second contact being configured to electrically couple the electronic unit to the second electrical terminal.

7. The electronic battery assembly of claim 6, wherein the first and second contacts are configured to fasten the electronic unit to the electrical insulator.

8. The electric battery assembly of any preceding claim, wherein the electronic unit is configured to draw electrical power from the battery cell.

9. The electric battery assembly of any preceding claim, wherein the electronic unit comprises a wireless transmitter configured to wirelessly transmit the measured property of the battery cell.

10. The electric battery assembly of claim 8 or 9, comprising a current interrupt device "CID", the CID comprising a pressure detector configured to detect when an internal gas pressure of the battery cell is greater than or equal to a predetermined gas pressure, the CID being configured to establish an electrical contact with the electronic unit in dependence on the internal gas pressure of the battery cell being greater than or equal to the predetermined gas pressure; and wherein
the electronic unit is configured to transmit a signal to a battery management system when the CID is in electrical contact with the electronic unit.

11. The electric battery assembly of claim 10, wherein the pressure detector comprises a diaphragm configured to deform and establish the electrical contact with the electronic unit.

12. The electric battery assembly of any preceding claim, wherein the first and second electrical terminals are respectively the positive and negative electrical terminals of the battery cell, or respectively the negative and positive electrical terminals of the battery cell.

13. The electric battery assembly of any preceding claim, wherein the battery cell is a prismatic battery cell.

14. The electric battery assembly of claim 13, wherein the first and second electrical terminals are located at different faces of the prismatic cell.

15. The electric battery assembly of claim 14, wherein the first and second electrical terminals are located on opposing faces of the prismatic cell.

16. An electric battery comprising a plurality of electric battery assemblies of any one of claims 1 to 15.
